# EUROPEAN PATENT APPLICATION

(11) **EP 3 961 021 A1**
(43) Date of publication of application: **02.03.2022**
(21) Application number: 20794922.3
(22) Date of filing: 07.04.2020
(51) Int. Cl.: F02F 1/24, F02F 1/42, F01L 3/24

(54) **METHOD FOR MACHINING CYLINDER HEAD FOR MULTICYLINDER ENGINE**

(30) Priority: 23.04.2019 JP 2019081548
(71) Applicant: MAZDA MOTOR CORPORATION, Hiroshima 730-8670 (JP)
(72) Inventor: TAKAHASHI, Hirokazu, Aki-gun, Hiroshima 730-8670 (JP); HAYASHI, Kazuya, Aki-gun, Hiroshima 730-8670 (JP); ENOMOTO, Tomoaki, Aki-gun, Hiroshima 730-8670 (JP); AOKI, Yuto, Aki-gun, Hiroshima 730-8670 (JP); YAMAOKA, Hajime, Aki-gun, Hiroshima 730-8670 (JP); SHIMIZU, Keita, Aki-gun, Hiroshima 730-8670 (JP)
(74) Representative: Müller-Boré & Partner Patentanwälte PartG mbB
(86) International application number: PCT/JP2020/015715
(87) International publication number: WO 2020/217978

(57) **Abstract**

A processing method of a cylinder head for a multi-cylinder engine of the present invention includes a step of fixing the cylinder head to a fixing jig of a machining apparatus in a vertical placement posture in which plural recesses are arrayed in an up-down direction, the plural recesses configuring portions of combustion chambers of respective cylinders, a step of calculating inclination information of the cylinder head in the vertical placement posture by measuring relative positions of at least two recess reference surfaces among recess reference surfaces which are respectively formed in the plural recesses, a step of correcting a recess processing condition by a tool of the machining apparatus, the recess processing condition being defined in advance, based on the calculated inclination information, and a step of processing respective inner walls of the plural recesses by the tool of the machining apparatus based on the corrected recess processing condition.

## Description

### Technical Field

The present invention relates to a processing method of a cylinder head used for a multi-cylinder engine.

### Background Art

In a spark-ignition type gasoline engine, making a compression ratio as high as possible is considered to lead to an improvement in fuel efficiency. As a combustion chamber having a shape which makes it easy to achieve a high compression ratio, a pent-roof type combustion chamber has been known. A pent-roof type combustion chamber is a combustion chamber composed of a pent-roof portion formed in a cylinder head, side walls of a cylinder formed in a cylinder block, and a piston reciprocating in the cylinder. The pent-roof portion includes an intake port side inclined surface and an exhaust port side inclined surface which are continuous in a roof shape.

The pent-roof type combustion chamber is advantageous in decreasing a combustion chamber volume compared to a cylinder volume and securing large diameters of intake and exhaust valves. In addition, the pent-roof type combustion chamber is also advantageous in controlling intake flows such as a tumble flow (vertical vortex flow) and a swirl flow (lateral vortex flow) in a cylinder. An in-line multi-cylinder engine is configured such that such pent-roof type combustion chambers (combustion chambers) are arrayed in one line.

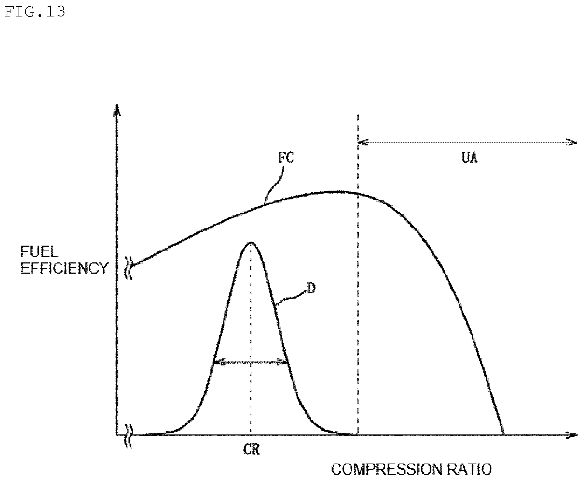

Here, as indicated by a curve FC in FIG. 13, a range of the compression ratio in which improvement effects of fuel efficiency can be obtained has an upper limit. That is, when the compression ratio rises to values included in an unstable area UA in FIG. 13, combustion becomes unstable due to knocking or the like, and fuel efficiency lowers. Further, in a multi-cylinder engine having plural cylinders, non-uniformity of volumes among combustion chambers of the respective cylinders occurs due to processing non-uniformity, and non-uniformity of compression ratios as indicated by a distribution curve D is thereby present. Thus, in order to make the compression ratios of all of the cylinders become lower values than the unstable area UA, design values of the compression ratios may have to be intentionally set low in consideration of non-uniformity of the compression ratios.

Meanwhile, at a compression top dead center, the pent-roof portion of the cylinder occupies a large portion of a combustion chamber volume. Thus, when processing precision of the cylinder head is improved, volume non-uniformity of the combustion chambers is decreased, and it becomes possible to achieve a high compression ratio for each cylinder.

As a technique for improving processing precision of a cylinder head, for example, the technique of Patent Literature 1 has been known. Specifically, in Patent Literature 1, in a cylinder head casted for an in-line four-cylinder engine, measurement for determining a processing amount (processing depth) of each pent-roof portion is performed for each cylinder, and each pent-roof portion is processed with the processing depth corresponding to the measurement result. Processing of the pent-roof portion by such a method makes the volumes of combustion chambers uniform and contributes to reduction in non-uniformity of compression ratios.

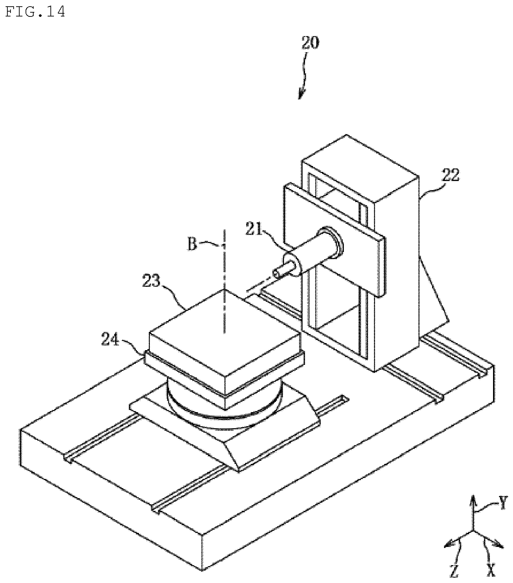

In general, in a case where precision processing as in Patent Literature 1 is applied to a cylinder head molded by casting, a machining center 20 (machining apparatus) as illustrated in FIG. 14 is used, for example. The machining center 20 has a spindle 21 on whose distal end a tool is mounted, a column 22 which moves the spindle 21 in a horizontal direction (X-axis direction) and in an up-down direction (Y-axis direction), a processing table 24 onto which a fixing jig 23 fixing a workpiece is placed and fixed, a mechanism which moves the processing table 24 in a rotational axis direction (Z-axis direction) of the spindle 21, and a mechanism which rotates the processing table 24 around a B axis in parallel with the Y-axis direction. Fixing jigs 23 are exchangeable, and an appropriate jig corresponding to a workpiece and processing is selected as the fixing jig 23. Further, the machining center 20 further includes an automatic tool changer, not shown in the illustration, which automatically switches tools to be mounted on the spindle 21, and an appropriate tool is mounted on the spindle 21 in accordance with the kind of processing or the like.

When a pent-roof portion of a cylinder head for an in-line multi-cylinder engine is processed by the above machining center 20, the cylinder head is fixed to the fixing jig 23 in a vertical placement posture in which plural pent-roof portions are arrayed in one line in the up-down direction. In the vertical placement posture, because processing of all of the pent-roof portions can be performed from various angles while the processing table 24 is rotated around the B axis, the numbers of exchanges of tools and rotations are decreased, and processing efficiency can thereby be improved. When the cylinder head is replaced, such that a new (next) cylinder head is fixed to the fixing jig 23 in the same posture, plural reference surfaces formed in the cylinder head are caused to abut plural jig pad portions of the fixing jig to be fixed.

The machining center 20 performs processing based on processing conditions (such as used tools and processed sections and processing depths of the cylinder head) defined in advance and moves to processing of the next cylinder head when all of the defined processings are finished. When attachment and detachment of cylinder heads are repeated, alignment errors gradually become larger due to time changes such as wear and deformation of fixing pad portions of the fixing jig 23, and the posture of the fixed cylinder head may be inclined compared to a start of use of the fixing jig 23. When such an inclination (alignment errors) occurs, even under the same processing conditions, processing for the cylinder head does not become the same processing at a start of use of the fixing jig 23. This results in enlargement of volume non-uniformity of combustion chambers and is thus not preferable.

As a measure against the above problem, it is possible to perform maintenance of the machining center 20 and to thereby recover the fixing jig 23 from time changes and so forth. However, when such maintenance of the machining center 20 is frequently performed, maintenance costs increase, and further production efficiency lowers. Accordingly, in order to reduce a maintenance frequency of the machining center 20, as in Patent Literature 1, it is possible to determine a processing amount of the pent-roof portion based on a measurement result for each cylinder. In such a manner, even when alignment errors are present, volume non-uniformity of combustion chambers can be decreased. However, a method of Patent Literature 1 has a problem that because many parts to be measured are present, a processing time becomes long, and processing efficiency lowers.

Further, the cylinder head includes intake and exhaust ports opening in the pent-roof portions and valve seats to be attached to the intake and exhaust ports. Similarly to inner walls of the pent-roof portions, valve seat surfaces (abutting surfaces onto intake and exhaust valves) of the valve seats are in general formed by processing using the machining center 20. In this case, in a case where the alignment errors similar to the above occur, no-uniformity occurs to processing heights of the valve seat surfaces, and valve-head positions in a case where the intake and exhaust valves are closed are not aligned. This results in enlargement of volume non-uniformity of combustion chambers and is thus not preferable.

### Citation List

### Patent Literature

Patent Literature 1: Japanese Patent No. 5510653

### Summary of Invention

The present invention has been made in consideration of the above situation, and an object thereof is to provide a processing method of a cylinder head for a multi-cylinder engine that is capable of reducing volume non-uniformity of combustion chambers without largely lowering processing efficiency.

To solve the above problems, a first aspect of the present invention is a method of processing a cylinder head by a machining apparatus, the cylinder head being used for a multi-cylinder engine having plural cylinders and having plural recesses configuring portions of combustion chambers of the respective cylinders, the method including: a step of fixing the cylinder head to a fixing jig of the machining apparatus in a vertical placement posture in which the plural recesses are arrayed in an up-down direction; a step of calculating inclination information of the cylinder head in the vertical placement posture by measuring relative positions of at least two recess reference surfaces among recess reference surfaces which are respectively formed in the plural recesses in a state where the cylinder head is fixed to the fixing jig; a step of correcting a recess processing condition by a tool of the machining apparatus, the recess processing condition being defined in advance, based on the calculated inclination information; and a step of processing respective inner walls of the plural recesses by the tool of the machining apparatus based on the corrected recess processing condition.

A second aspect of the present invention is a method of processing a cylinder head by a machining apparatus, the cylinder head being used for a multi-cylinder engine having plural cylinders and having plural recesses configuring portions of combustion chambers of the respective cylinders, the method including: a step of fixing the cylinder head to a fixing jig of the machining apparatus in a vertical placement posture in which the plural recesses are arrayed in an up-down direction; a step of calculating inclination information of the cylinder head in the vertical placement posture by measuring relative positions of at least two measured portions, each of which is positioned between the plural recesses, in a mating surface of the cylinder head, the mating surface being joined to a cylinder block disposed so as to cover the plural recesses, in a state where the cylinder head is fixed to the fixing jig; a step of correcting a valve seat processing condition by a tool of the machining apparatus, the valve seat processing condition being defined in advance, based on the calculated inclination information; and a step of processing each of valve seat surfaces of valve seats provided to inner walls of the plural recesses by the tool of the machining apparatus based on the corrected valve seat processing condition.

A third aspect of the present invention is a method of processing a cylinder head by a machining apparatus, the cylinder head being used for a multi-cylinder engine having plural cylinders and having plural recesses configuring portions of combustion chambers of the respective cylinders, the method including: a recess processing step of processing respective inner walls of the plural recesses; a valve seat press-fitting step of press-fitting a valve seat into each of intake ports and exhaust ports which are formed in the inner wall of each of the recesses; a mating surface processing step of performing finishing processing of a mating surface of the cylinder head by a tool of the machining apparatus, the mating surface being joined to a cylinder block disposed so as to cover the plural recesses; and a valve seat processing step of processing respective valve seat surfaces of the press-fit valve seats, in which the recess processing step includes a step of fixing the cylinder head to a fixing jig of the machining apparatus in a vertical placement posture in which the plural recesses are arrayed in an up-down direction, a step of calculating inclination information of the cylinder head in the vertical placement posture by measuring relative positions of at least two recess reference surfaces among recess reference surfaces which are respectively formed in the plural recesses in a state where the cylinder head is fixed to the fixing jig, a step of correcting a recess processing condition by a tool of the machining apparatus, the recess processing condition being defined in advance, based on the calculated inclination information, and a step of processing respective inner walls of the plural recesses by the tool of the machining apparatus based on the corrected recess processing condition, and the valve seat processing step includes a step of fixing the cylinder head to the fixing jig of the machining apparatus in the vertical placement posture, a step of calculating inclination information of the cylinder head in the vertical placement posture by measuring relative positions of at least two measured portions, each of which is positioned between the plural recesses, in the mating surface in a state where the cylinder head is fixed to the fixing jig, a step of correcting a valve seat processing condition by a tool of the machining apparatus, the valve seat processing condition being defined in advance, based on the calculated inclination information, and a step of processing the respective valve seat surfaces of the valve seats based on the corrected valve seat processing condition.

### Brief Description of Drawings

[FIG. 1] FIG. 1 is a bottom view of a cylinder head according to one embodiment of the present invention.
[FIG. 2] FIG. 2 is a cross-sectional view illustrating a state where intake valves and exhaust valves are mounted on the cylinder head and is a cross-sectional view taken along line II-II in FIG. 1.
[FIG. 3] FIG. 3 is a cross-sectional view taken along line III-III in FIG. 1.
[FIG. 4] FIG. 4 is a flowchart illustrating procedures of processing of the cylinder head.
[FIG. 5] FIG. 5 is a perspective view of the cylinder head fixed to a fixing jig in a lateral placement posture.
[FIG. 6] FIG. 6 is an enlarged diagram of a recess when the cylinder head in FIG. 5 is seen from a mating surface side.
[FIG. 7] FIG. 7 is a side view of the cylinder head as seen from a spindle side, the cylinder head being fixed to a fixing jig in a vertical placement posture for measurement of recess reference surfaces.
[FIG. 8] FIG. 8 is a cross-sectional view of principal components, which schematically illustrates procedures for measuring positions of the recess reference surfaces.
[FIG. 9] FIG. 9 is a diagram illustrating a contact probe mounted on the spindle.
[FIG. 10] FIG. 10 is a side view of the cylinder head as seen from the spindle side, the cylinder head being fixed to the fixing jig in the vertical placement posture for processing valve seats on an intake side.
[FIG. 11] FIG. 11 is a cross-sectional view of principal components, which schematically illustrates procedures for measuring positions of measured portions of the mating surface.
[FIG. 12] FIG. 12 is a side view of the cylinder head as seen from the spindle side, the cylinder head being fixed to the fixing jig in the vertical placement posture for processing valve seats on an exhaust side.
[FIG. 13] FIG. 13 is a diagram illustrating the relationship between fuel efficiency and compression ratio.
[FIG. 14] FIG. 14 is a perspective view of a machining center.

### Description of Embodiment

A preferred embodiment for carrying out the present invention will hereinafter be described based on drawings.

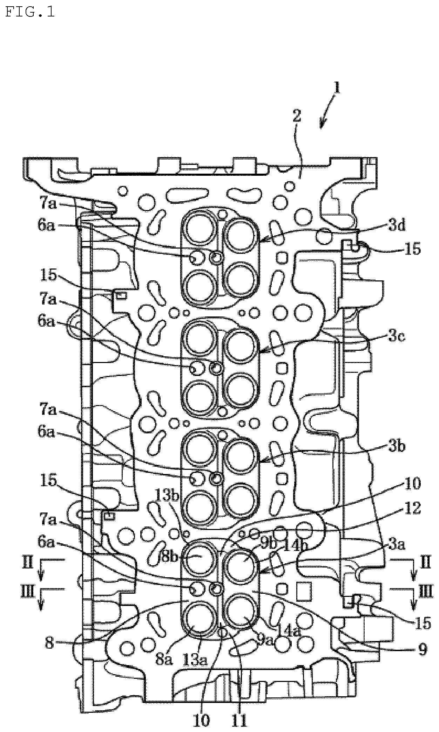

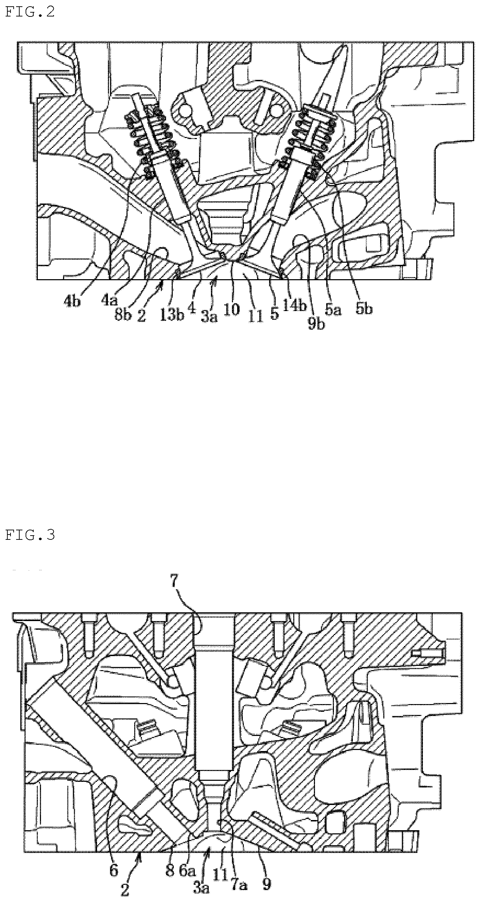

A processing method of the present embodiment is applied to a cylinder head 1 used for an in-line four-cylinder engine. As illustrated in FIG. 1 to FIG. 3, the cylinder head 1 is molded by applying cutting processing or the like using a machining center 20 (FIG. 14) after molding by casting. The cylinder head 1 is joined to a cylinder block, not shown in the illustration, via a gasket member, not shown in the illustration. The cylinder head 1 has a flat mating surface 2 as a joining surface to the cylinder block. The mating surface 2 has four recesses 3a to 3d provided to be recessed so as to be concaved to an opposite side to the cylinder block and plural first reference surfaces 15 molded in casting for being used as references in processing. The recesses 3a to 3d are recesses corresponding to pent-roof portions of a pent-roof type combustion chambers. That is, the recesses 3a to 3d configure the pent-roof type combustion chambers (hereinafter simply referred to as combustion chambers) together with side walls of cylinders formed in the cylinder block, not shown in the illustration, and pistons, not shown in the illustration, which slide in the cylinders.

A head cover, not shown in the illustration, is mounted on a surface on the opposite side to the mating surface 2 in the cylinder head 1. In a mating portion between the cylinder head 1 and the head cover, an intake camshaft and an exhaust camshaft, not shown in the illustration, are disposed. The intake camshaft and the exhaust camshaft are driven to open and close intake valves 4 and exhaust valves 5 in response to rotation of an output shaft (crankshaft) of the engine. The intake valve 4 and the exhaust valve 5 are supported by valve guides 4a and 5a mounted on the cylinder head 1 and are urged in a closing direction by valve springs 4b and 5b.

In the cylinder head 1, a plug hole 6, on which a spark plug igniting an air-fuel mixture in which air and fuel are mixed together is mounted, and an injector hole 7, on which an injector supplying fuel to the combustion chamber is mounted, are provided to each of the recesses 3a to 3d.

Next, the recesses 3a to 3d will be described. However, because the recesses 3a to 3d have similar configurations, in the following, the recess 3a will mainly be described, and descriptions in detail about the recesses 3b to 3d will not be made.

An inner wall of the recess 3a has an intake port side inclined surface 8 in which intake ports 8a and 8b open, the intake ports 8a and 8b being opened and closed by the intake valves 4, an exhaust port side inclined surface 9 in which exhaust ports 9a and 9b open, the exhaust ports 9a and 9b being opened and closed by the exhaust valves 5, a top portion coupling surface 10 which connects the intake port side inclined surface 8 and the exhaust port side inclined surface 9 together, and a pair of side wall inclined surfaces 11 and 12.

Each of the intake port side inclined surface 8 and the exhaust port side inclined surface 9 is a flat inclined surface. The top portion coupling surface 10 smoothly connects the intake port side inclined surface 8 and the exhaust port side inclined surface 9 together in a curved surface shape and is formed to linearly extend between the pair of side wall inclined surfaces 11 and 12. The pair of side wall inclined surfaces 11 and 12 are formed into curved surface shapes designed in consideration of intake flows.

Annular valve seats 13a and 13b are press-fit into opening peripheral portions of the intake ports 8a and 8b which valve faces of the intake valves 4 abut. Similarly, annular valve seats 14a and 14b are press-fit into opening peripheral portions of the exhaust ports 9a and 9b which valve faces of the exhaust valves 5 abut. Those valve seats 13a, ..., 14b are configured with a material which is different from the cylinder head 1 and is excellent in heat resistance, heat conduction, wear resistance, and so forth.

An opening 6a communicating with the plug hole 6 is formed between the two intake ports 8a and 8b in the intake port side inclined surface 8. In a general center of the top portion coupling surface 10, an opening 7a communicating with the injector hole 7 is formed. The recesses 3a to 3d are formed in the cylinder head 1 such that the respective intake ports 8a and 8b are arrayed in one line on one sides of the top portion coupling surfaces 10 (cylinder center) and the respective exhaust ports 9a and 9b are arrayed in one line on the other sides (the opposite sides to the intake ports 8a and 8b) of the top portion coupling surfaces 10.

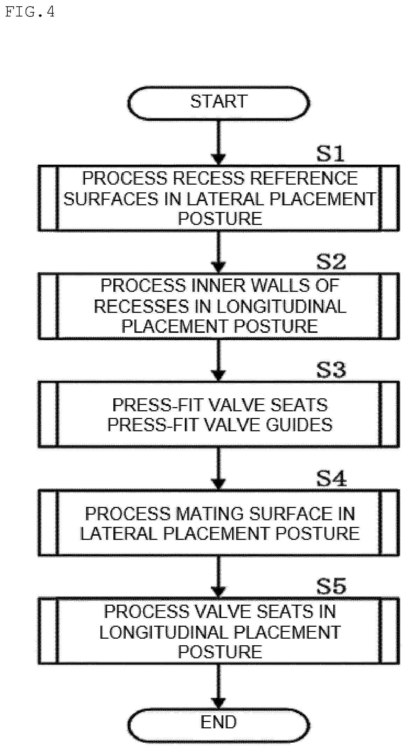

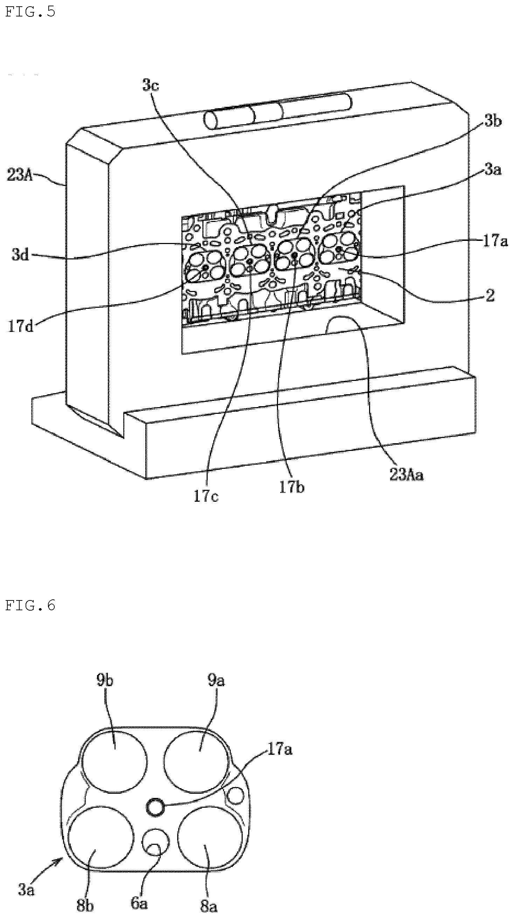

Next, a processing method of the cylinder head 1 will in order be described by using a flowchart of FIG. 4 while FIG. 5 to FIG. 12 and FIG. 14 are also referred to. Note that Si (i = 1, 2, ...) in FIG. 4 denotes a step.

First, in S1, reference surfaces (third reference surfaces 17a to 17d described later) are processed in inner walls of the recesses 3a to 3d. This processing of the reference surfaces in S1 is performed by the following procedures.

As illustrated in FIG. 5, the cylinder head 1 molded by casting is fixed to a fixing jig 23A of the machining center 20 (machining apparatus) in a lateral placement posture in which the recesses 3a to 3d are arrayed in a horizontal direction (left-right direction). In this case, the plural first reference surfaces 15 (FIG. 1) formed in the mating surface 2 by casting are caused to abut plural jig pad portions, not shown in the illustration, included in the fixing jig 23A.

Here, for the machining center 20, in addition to the above-described fixing jig 23A for fixing the cylinder head 1 in the lateral placement position, a fixing jig 23B (second fixing jig) is prepared which is for fixing the cylinder head 1 in a vertical placement posture in S2 and so forth described later. Each of the fixing jig 23A and the fixing jig 23B is equipped with plural clamping devices (for example, swing clamps), those clamp devices clamp predetermined parts of the cylinder head 1, and the cylinder head 1 is fixed to the fixing jigs 23A and 23B. Note that the machining center 20 according to the present embodiment is capable of selectively fixing the fixing jig 23A and the fixing jig 23B to the same processing table 24, and in the above S1, the fixing jig 23A is selected from those jigs and is fixed to the processing table 24. However, two processing tables respectively corresponding to the fixing jig 23A and the fixing jig 23B may separately be provided.

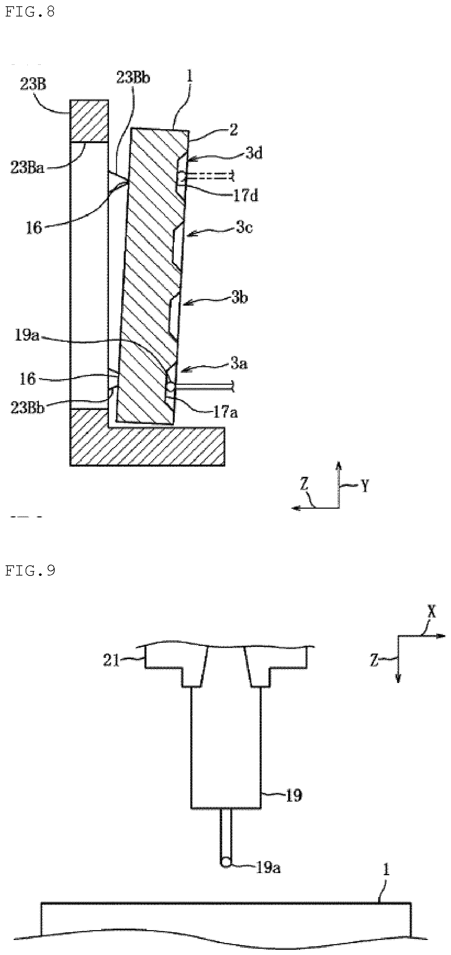

After the cylinder head 1 is fixed to the fixing jig 23A fixed to the processing table 24, the machining center 20 performs processing for forming the plug hole 6 and the injector hole 7 of each of the cylinders based on processing conditions defined in advance. Further, the machining center 20 performs processing for forming plural second reference surfaces 16 (FIG. 8) which function as reference surfaces for fixing in subsequent steps. Processing of those plug holes 6, injector holes 7, and second reference surfaces 16 is performed from a head cover side (the opposite side to the mating surface 2) by using a cutting tool (illustration omitted) mounted on the spindle 21.

Next, the machining center 20 performs processing for forming the third reference surfaces 17a to 17d (recess reference surfaces) of the respective recesses 3a to 3d based on processing conditions (reference surface processing condition) defined in advance (see FIG. 5 and FIG. 6). Processing of those third reference surfaces 17a to 17d is performed from the mating surface 2 side by using a cutting tool (illustration omitted) mounted on the spindle 21. In this case, the tool is capable of accessing the third reference surfaces 17a to 17d via a processing opening 23Aa provided to the fixing jig 23A.

At a time point when the third reference surface 17a to 17d are formed, end portions of the injector holes 7 on the combustion chamber sides are blocked by those third reference surfaces 17a to 17d. Boring processing is applied to the third reference surfaces 17a to 17d in a subsequent step, and the injector holes 7 communicating with the combustion chambers are thereby formed.

In processing for forming the third reference surfaces 17a to 17d, the machining center 20 adjusts a processing angle by rotating the processing table 24 around a B axis, adjusts a processing position by moving the spindle 21 on which the tool is mounted in an X-axis direction and a Y-axis direction by a column 22, and further adjusts a processing depth by moving the processing table 24 in a Z-axis direction (see FIG. 14). When the processing table 24 is rotated around the B axis, the processing table 24 is rotated while a rotation angle origin is set as a reference, the rotation angle origin being set such that a reference axis of the fixing jig 23 or the like becomes parallel with the Z axis, for example. The same applies to subsequent steps.

As described above, in S1, processing for forming each of the third reference surfaces 17a to 17d as the recess reference surfaces is performed for the cylinder head 1 set to the lateral placement posture such that the recesses 3a to 3d are arrayed in the horizontal direction. Thus, even when the mating surface 2 of the cylinder head 1 is inclined in the Z-axis direction with respect to the perpendicular direction (Y axis) due to wear or the like of the jig pad portions of the fixing jig 23A, without being influenced by this inclination, each of the reference surfaces 17a to 17d can be processed such that all of the third reference surfaces 17a to 17d are positioned in the same plane.

Next, in S2, the inner walls of the recesses 3a to 3d are processed. A step of S2 corresponds to a recess processing step in the present invention. This processing of the inner walls in S2 is performed by the following procedures.

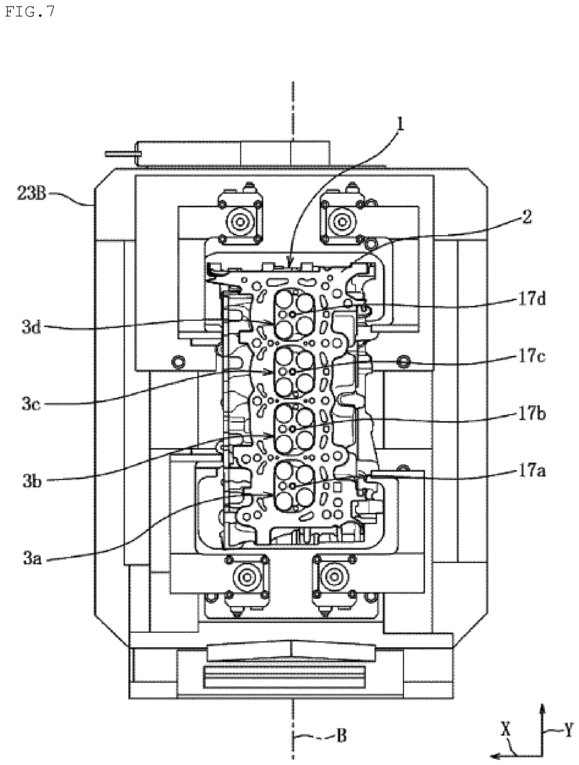

As for the jig to be fixed to the processing table 24, the fixing jig 23A for lateral placement is exchanged with the fixing jig 23B (FIG. 7 and FIG. 8) for vertical placement. Then, the cylinder head 1 is fixed, in the vertical placement posture, to the fixing jig 23B newly fixed to the processing table 24. That is, the cylinder head 1 is fixed to the fixing jig 23B in the vertical placement posture in which the recesses 3a to 3d are arrayed in an up-down direction. In this case, jig pad portions 23Bb (FIG. 8) included in the fixing jig 23B are caused to abut the plural second reference surfaces 16 formed on the head cover side of the cylinder head 1. In a case where alignment errors occur due to wear or the like of the jig pad portions 23Bb, the third reference surfaces 17a to 17d formed in the recesses 3a to 3d are arranged to be arrayed in the up-down direction in a plane which is inclined in the Z-axis direction with respect to the perpendicular direction (Y axis). On the other hand, in a case where no alignment error occurs, the third reference surfaces 17a to 17d are arranged to be arrayed in the up-down direction in a plane parallel with the perpendicular direction (Y axis), in other words, in a perpendicular plane.

After the cylinder head 1 is fixed to the fixing jig 23B, the machining center 20 rotates the processing table 24 around the B axis such that the recesses 3a to 3d face the spindle 21 side and the mating surface 2 becomes parallel with the X axis. Further, the machining center 20 causes a contact probe 19 illustrated in FIG. 9 to be mounted on the spindle 21. The contact probe 19 is a measurement apparatus that detects that a workpiece abuts a distal end portion 19a of the contact probe 19 and performs transmission to the machining center 20 and is one kind of tool.

Next, the machining center 20 measures the Z-axis coordinates of at least two reference surfaces among the third reference surfaces 17a to 17d. Here, as illustrated in FIG. 8, the Z-axis coordinates of the two third reference surfaces 17a and 17d positioned at both ends in the Y-axis direction are measured. That is, the machining center 20 causes the distal end portion 19a of the contact probe 19 to abut each of the third reference surfaces 17a and 17d and thereby measures the Z-axis coordinates of both of the reference surface 17a and 17d. Contact of the distal end portion 19a with the third reference surfaces 17a and 17d can be performed by moving the processing table 24 in the Z-axis direction or the like in a state where the distal end portion 19a of the contact probe 19 is positioned to the positions opposed to the third reference surfaces 17a and 17d in the Z-axis direction, for example.

Next, the machining center 20 calculates an inclination (inclination information) of the cylinder head 1 in the Z-axis direction based on measured values of the Z-axis coordinates of the above-described third reference surfaces 17a and 17d. That is, the machining center 20 calculates the difference between both of the Z-axis coordinates, in other words, the distance (relative positions) between the third reference surfaces 17a and 17d in the Z-axis direction based on the measured values of the Z-axis coordinates of the third reference surfaces 17a and 17d and calculates the inclination of the cylinder head 1 in the Z-axis direction with respect to the perpendicular direction (Y axis) based on the distance in the Z-axis and a designed distance between the third reference surfaces 17a and 17d in the Y-axis direction. Note that for calculating the inclination of the cylinder head 1, it is sufficient to measure the relative positions of the two third reference surfaces as described above, but it is also possible to increase the number of measured parts to three or more.

Next, the machining center 20 corrects processing conditions of the recesses 3a to 3d (recess processing condition), which are defined in advance, based on the inclination calculated as described above. That is, taking into consideration the fact that initial processing conditions are defined on the assumption that the inclination of the cylinder head 1 is zero, the processing depths or the like of the recesses 3a to 3d are corrected such that the targeted shapes of the recesses 3a to 3d are obtained under a circumstance where the cylinder head 1 is inclined. This correction of the processing conditions (recess processing condition) is performed for each of the recesses 3a to 3d. Note that in a case where the calculated inclination is within a reference range defined in advance, correction of the processing conditions may not have to be performed. Further, in a case where the inclination is out of the reference range, because interposition of a foreign object is possibly occurring, measurement may again be performed after a wash is performed for removing this foreign object. The same applies to subsequent measurement.

Next, the machining center 20 performs cutting processing of the inner wall of each of the recesses 3a to 3d based on the corrected processing conditions and forms the intake port side inclined surface 8, the exhaust port side inclined surface 9, the top portion coupling surface 10, the side wall inclined surfaces 11 and 12, and so forth. This processing of the inner walls is performed from the mating surface 2 side by using the cutting tool (illustration omitted) mounted on the spindle 21. In this case, the third reference surface 17a to 17d are left without being processed.

As described above, in S2, the cylinder head 1 is arranged in the vertical placement posture, the cylinder head 1 having the third reference surfaces 17a to 17d processed to be positioned in the same plane, and in this state, the inclination of the cylinder head 1 in the Z-axis direction is measured. More specifically, as the relative positions of the two reference surfaces among the third reference surfaces 17a to 17d, the distance in the Z-axis direction between the third reference surfaces 17a and 17d is measured. In addition, based on this distance (relative positions) in the Z-axis direction, the inclination of the cylinder head 1 in the Z-axis direction is calculated. This leads to an improvement in precision of calculation of the inclination. Further, in S2, based on the calculated inclination of the cylinder head 1 in the Z-axis direction, the processing conditions (such as the processing depths in the Z-axis direction) for processing the inner walls of the recesses 3a to 3d are corrected, and the inner walls of the recesses 3a to 3d are processed based on the corrected processing conditions. Accordingly, because it becomes possible to align the processing depths of the recesses 3a to 3d corresponding to the pent-roof portions to equivalent depths, volume non-uniformity of the combustion chambers including the pent-roof portions can be reduced. Furthermore, because it is sufficient to measure the relative positions of at least two reference surfaces (here, the third reference surfaces 17a and 17d) for processing of the four recesses 3a to 3d, lowering of processing efficiency can be reduced by shortening a measuring time.

Next, in S3, the valve seats 13a, ..., 14b are press-fit into the intake and exhaust ports 8a, ..., 9b formed in each of the recesses 3a to 3d. That is, the valve seats 13a and 13b are press-fit into the intake ports 8a and 8b, and the valve seats 14a and 14b are press-fit into the exhaust ports 9a and 9b. Further, members such as the valve guides 4a and 5a are together press-fit. Note that S3 is a step corresponding to a valve seat press-fitting step in the present invention.

Next, in S4, the mating surface 2 is processed (finishing processing). A step of S4 corresponds to a mating surface processing step in the present invention. This processing of the mating surface 2 in S4 is performed by the following procedures.

As for the jig to be fixed to the processing table 24, the fixing jig 23B for vertical placement is exchanged with the fixing jig 23A (FIG. 5) for lateral placement. Then, the cylinder head 1 is fixed, in the lateral placement posture, to the fixing jig 23A newly fixed to the processing table 24. That is, the cylinder head 1 is fixed to the fixing jig 23A in the lateral placement posture in which the recesses 3a to 3d are arrayed in the horizontal direction. In this case, plural jig pad portions, not shown in the illustration, included in the fixing jig 23A are caused to abut the plural second reference surfaces 16 formed on the head cover side of the cylinder head 1.

After the cylinder head 1 is fixed to the fixing jig 23A, the machining center 20 performs cutting processing (finishing processing) to make the mating surface 2 flat based on processing conditions defined in advance. Because the posture of the cylinder head 1 is the lateral placement posture in this case, compared to a case of the vertical placement posture, the width of the mating surface 2 in the up-down direction becomes narrow, and an influence of the inclination in the Z-axis direction is decreased.

More specifically, in processing the mating surface 2, the machining center 20 measures the positions (coordinates), in the Z-axis direction, of the third reference surfaces 17a and 17d in the two recesses 3a and 3d positioned at both ends in the horizontal direction and corrects rotation of the fixing jig 23A around the B axis such that the positions of those two points in the Z-axis direction become the same. Then, the machining center 20 performs cutting processing to make the mating surface 2 flat such that the processing depths in the Z-axis direction become the same in a state where rotation is corrected around the B axis as described above.

Next, in S5, the valve seats 13a, ..., 14b are processed. A step of S5 corresponds to a valve seat processing step in the present invention. This processing of the valve seats 13a, ..., 14b in S5 is performed by the following procedures.

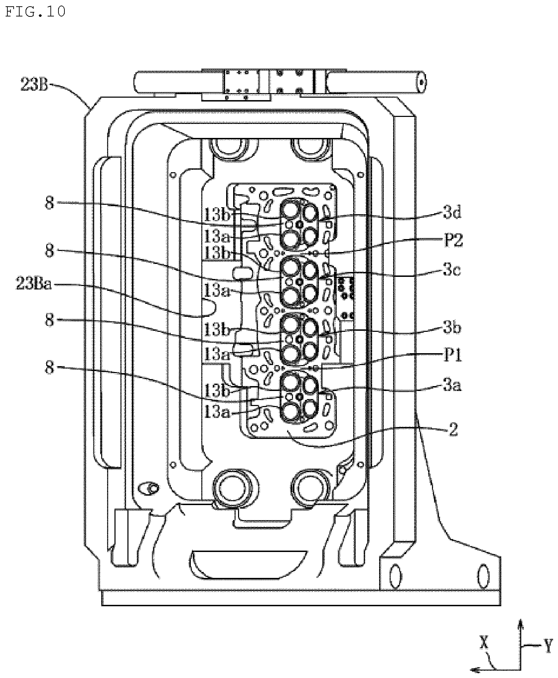

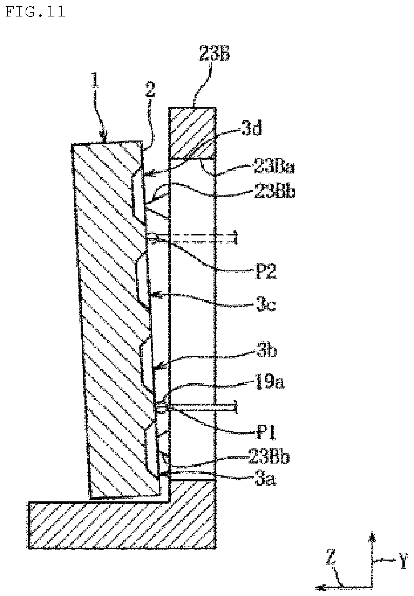

As for the jig to be fixed to the processing table 24, the fixing jig 23A for lateral placement is exchanged with the fixing jig 23B (FIG. 10 and FIG. 11) for vertical placement. Then, the cylinder head 1 is fixed, in the vertical placement posture, to the fixing jig 23B newly fixed to the processing table 24. That is, the cylinder head 1 is fixed to the fixing jig 23B in the vertical placement posture in which the recesses 3a to 3d are arrayed in the up-down direction. In this case, the mating surface 2, which is processed to be flat, of the cylinder head 1 is caused to abut the jig pad portions 23Bb (FIG. 11) of the fixing jig 23.

After the cylinder head 1 is fixed to the fixing jig 23B, as illustrated in FIG. 10, the machining center 20 rotates the processing table 24 around the B axis such that the recesses 3a to 3d face the spindle 21 side and the respective intake port side inclined surfaces 8 of the recesses 3a to 3d become parallel with the X axis. Further, the machining center 20 causes the contact probe 19 (FIG. 9) to be mounted on the spindle 21.

Next, the machining center 20 measures the Z-axis coordinates of at least two parts included in the mating surface 2. Here, as illustrated in FIG. 11, the machining center 20 measures each of the Z-axis coordinate of a measured portion P1 between the recesses 3a and 3b neighboring in the up-down direction and the Z-axis coordinate of a measured portion P2 between the recesses 3c and 3d neighboring in the up-down direction. That is, the machining center 20 causes the distal end portion 19a of the contact probe 19 to abut each of the measured portions P1 and P2 and thereby measures the Z-axis coordinates of both of the measured portions P1 and P2. Contact of the distal end portion 19a with the measured portions P1 and P2 can be performed by moving the processing table 24 in the Z-axis direction or the like in a state where the distal end portion 19a of the contact probe 19 is positioned to the positions opposed to the measured positions P1 and P2 in the Z-axis direction, for example. In this case, the contact probe 19 is capable of accessing the measured portions P1 and P2 via a processing opening 23Ba provided to the fixing jig 23B.

Next, the machining center 20 calculates an inclination (inclination information) of the cylinder head 1 in the Z-axis direction based on measured values of the Z-axis coordinates of the above-described measured portions P1 and P2. That is, the machining center 20 calculates the difference between both of the Z-axis coordinates, in other words, the distance (relative positions) between the measured portions P1 and P2 in the Z-axis direction based on the measured values of the Z-axis coordinates of the measured portions P1 and P2 and calculates the inclination of the cylinder head 1 in the Z-axis direction with respect to the perpendicular direction (Y axis) based on the distance in the Z-axis direction and a designed distance between the measured portions P1 and P2 in the Y-axis direction. Note that for calculating the inclination of the cylinder head 1, it is sufficient to measure the relative positions of the two measured portions as described above, but it is also possible to increase the number of measured parts to three or more.

Next, the machining center 20 corrects processing conditions of the valve seats 13a and 13b (valve seat processing condition), which are defined in advance, for example, such as processing depths in the Z-axis direction in processing the valve seats 13a and 13b, based on the inclination calculated as described above. This correction of the processing conditions (valve seat processing condition) may be performed for each of the recesses but is preferably performed for each of the valve seats for decreasing processing non-uniformity.

Next, the machining center 20 performs cutting processing of the valve seats 13a and 13b on an intake side of each of the recesses 3a to 3d based on the corrected processing conditions. That is, the machining center 20 uses the cutting tool (illustration omitted) mounted on the spindle 21 to perform cutting processing of valve seat surfaces (surfaces which the valve faces of the intake valves 4 abut) of the valve seats 13a and 13b attached to the intake port side inclined surface 8 of each of the recesses 3a to 3d, from the mating surface 2 side. In this case, the tool is capable of accessing the valve seats 13a and 13b via the processing opening 23Ba provided to the fixing jig 23B.

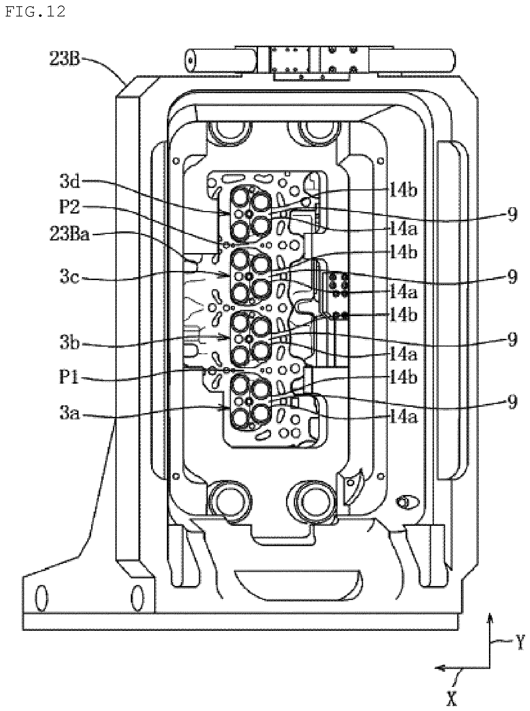

The valve seats 14a and 14b on an exhaust side are also processed similarly to the above. That is, as illustrated in FIG. 12, the machining center 20 rotates the processing table 24 around the B axis such that the recesses 3a to 3d face the spindle 21 side and the respective exhaust port side inclined surfaces 9 of the recesses 3a to 3d become parallel with the X axis. Further, the machining center 20 causes the contact probe 19 (FIG. 9) to be mounted on the spindle 21.

Next, as illustrated in FIG. 11, the machining center 20 uses the contact probe 19 to measure the respective Z-axis coordinates of the measured portions P1 and P2 of the mating surface 2. Details of measurement procedures here are similar to the above-described processing of the valve seats 13a and 13b on the intake side.

Next, the machining center 20 calculates an inclination (inclination information) of the cylinder head 1 in the Z-axis direction based on the relative positions in the Z-axis direction (the distance in the Z-axis direction) which are specified from the measured Z-axis coordinates of the measured portions P1 and P2 and a designed distance between the measured portions P1 and P2 in the Y-axis direction. Details of calculation procedures here are similar to the above-described processing of the valve seats 13a and 13b on the intake side.

Next, the machining center 20 corrects processing conditions of the valve seats 14a and 14b (valve seat processing condition), which are defined in advance, for example, such as processing depths in the Z-axis direction in processing the valve seats 14a and 14b, based on the inclination calculated as described above. This correction of the processing conditions (valve seat processing condition) may be performed for each of the recesses but is preferably performed for each of the valve seats for decreasing processing non-uniformity.

Next, the machining center 20 performs cutting processing of the valve seats 14a and 14b on the exhaust side of each of the recesses 3a to 3d based on the corrected processing conditions. That is, the machining center 20 uses the cutting tool (illustration omitted) mounted on the spindle 21 to perform cutting processing of valve seat surfaces (surfaces which the valve faces of the exhaust valves 5 abut) of the valve seats 14a and 14b attached to the exhaust port side inclined surface 9 of each of the recesses 3a to 3d, from the mating surface 2 side. In this case, the tool is capable of accessing the valve seats 14a and 14b via the processing opening 23Ba provided to the fixing jig 23B. Further, in processing the valve seats 14a and 14b, the machining center 20 bores into the respective third reference surfaces 17a to 17d of the recesses 3a to 3d and thereby together performs processing for causing the injector holes 7 to communicate with the combustion chambers.

As described above, in S5, the cylinder head 1 is arranged in the vertical placement posture, the cylinder head 1 having the mating surface 2 processed to be flat, and based on the relative positions of the two measured portions P1 and P2 which are measured in such a state, the inclination of the cylinder head 1 in the Z-axis direction is measured. This leads to an improvement in precision of calculation of the inclination. Further, in S5, based on the calculated inclination of the cylinder head 1 in the Z-axis direction, the processing conditions (such as the processing depths in the Z-axis direction) for processing the valve seats 13a, ..., 14b to be attached to each of the recesses 3a to 3d are corrected, and the valve seat surfaces of the valve seats 13a, ..., 14b are processed based on the corrected processing conditions. Accordingly, because it becomes possible to align the processing depths of the valve seats 13a and 13b in each of the recesses 3a to 3d to equivalent depths, non-uniformity of the positions of valve heads in a state where the intake and exhaust valves 4 and 5 are closed can be reduced among the cylinders, and volume non-uniformity of the combustion chambers can be reduced. Furthermore, it is sufficient to measure the relative positions of the two measured portions P1 and P2 for both processings of the eight valve seat surfaces on the intake side and of the eight valve seat surfaces on the exhaust side, and lowering of processing efficiency can thus be reduced by shortening the measuring time.

Next, work and effects of the above embodiment will be described.

In the above embodiment, in a case where the cylinder head 1 fixed to the fixing jig 23B in the vertical placement posture is inclined due to alignment errors or the like, the inclination information of the cylinder head 1 is acquired, and the inner walls of the plural recesses 3a to 3d are processed based on the processing conditions corrected by using the acquired inclination information. In this method, the respective inner walls of the recesses 3a to 3d can be processed based on the processing conditions which are corrected so as to decrease an influence of the inclination of the cylinder head 1, and non-uniformity of the shapes of the recesses 3a to 3d can be reduced among the cylinders. Accordingly, while a maintenance frequency of the machining center 20 is reduced, volume non-uniformity of the combustion chambers can be reduced. Further, for processing of the plural (four) recesses 3a to 3d, inclination information for processing condition correction can be obtained by measuring the relative positions of at least two parts. Thus, lowering of processing efficiency can be reduced by shortening the measuring time.

Further, in the above embodiment, after the inner walls of the recesses 3a to 3d are processed as described above, the valve seats 13a, ..., 14b are press-fit into the intake ports 8a and 8b and the exhaust ports 9a and 9b of each of the recesses 3a to 3d, the inclination information of the cylinder head 1 fixed to the fixing jig 23B in the vertical placement posture is acquired, and further the valve seat surfaces of the valve seats 13a, ..., 14b are processed based on the processing conditions corrected by using the acquired inclination information. In this method, the valve seat surfaces of the valve seats 13a, ..., 14b of each of the recesses 3a to 3d can be processed under the processing conditions which are corrected so as to decrease an influence of the inclination of the cylinder head 1, and non-uniformity of the positions of the valve seat surfaces of the valve seats 13a, ..., 14b can be reduced among the cylinders. Accordingly, because the positions of the valve heads are easily aligned in a state where the intake valves 4 and the exhaust valve 5 are closed, while the maintenance frequency of the machining center 20 is reduced, volume non-uniformity of the combustion chambers can be reduced. Further, for processing of the plural valve seats 13a, ..., 14b, inclination information for processing condition correction can be obtained by measuring the relative positions of at least two parts. Thus, lowering of processing efficiency can be reduced by shortening the measuring time.

Furthermore, in the above embodiment, before the inner walls of the recesses 3a to 3d are processed, the cylinder head 1 is fixed to the fixing jig 23A in the lateral placement posture in which the plural recesses 3a to 3d are arrayed in the horizontal direction, and in this state, processing for forming the third reference surfaces 17a to 17d (recess reference surfaces) in the recesses 3a to 3d is performed. In this method, without being influenced by the inclination of the cylinder head 1 in the Z-axis direction, each of the reference surfaces 17a to 17d can be formed such that all of the third reference surfaces 17a to 17d are positioned in the same plane. Thus, the inclination information necessary for processing the inner walls of the recesses 3a to 3d can highly precisely be calculated based on the relative positions of at least two third reference surfaces which are positioned in the same plane. In addition, the processing conditions are corrected based on this calculated inclination information, and the respective inner walls of the recesses 3a to 3d can thereby properly be processed such that shape non-uniformity of the recesses 3a to 3d is decreased.

Note that in the above embodiment, the valve seats are press-fit into the inner walls of the plural recesses 3a to 3d; however, this is not restrictive, and the valve seats may be formed by performing build-up welding with a material having wear resistance for the inner walls of the plural recesses 3a to 3d. In processing of a valve seat surface of a valve seat formed in such a method, the present invention is also suitably applicable. Other than the above, a person skilled in the art would be capable of carrying out forms in which various changes are added to the above embodiment without departing from the gist of the present invention, and the present invention encompasses such kinds of changed forms.

### <Conclusion of Embodiment>

The above embodiment will be summarized as follows.

A processing method of the above embodiment is applied to a case where a cylinder head is processed by a machining apparatus, the cylinder head being used for a multi-cylinder engine having plural cylinders and having plural recesses configuring portions of combustion chambers of the respective cylinders. This processing method includes: a step of fixing the cylinder head to a fixing jig of the machining apparatus in a vertical placement posture in which the plural recesses are arrayed in an up-down direction; a step of calculating inclination information of the cylinder head in the vertical placement posture by measuring relative positions of at least two recess reference surfaces among recess reference surfaces which are respectively formed in the plural recesses in a state where the cylinder head is fixed to the fixing jig; a step of correcting a recess processing condition by a tool of the machining apparatus, the recess processing condition being defined in advance, based on the calculated inclination information; and a step of processing respective inner walls of the plural recesses by the tool of the machining apparatus based on the corrected recess processing condition.

In this configuration, even in a case where the cylinder head fixed to the fixing jig in the vertical placement posture is inclined due to alignment errors or the like, the respective inner walls of the recesses can be processed based on the processing condition which is corrected so as to decrease an influence of the inclination, and non-uniformity of the shapes of the recesses can be reduced among the cylinders. Accordingly, while a maintenance frequency of the machining apparatus is reduced, volume non-uniformity of the combustion chambers can be reduced, and lowering of processing efficiency can be reduced.

The processing method preferably further includes: a step of fixing the cylinder head to a second fixing jig of the machining apparatus in a lateral placement posture in which the plural recesses are arrayed in a horizontal direction before the inner walls of the plural recesses are processed; and a step of forming the respective recess reference surfaces in the plural recesses by a tool of the machining apparatus based on a reference surface processing condition, which is defined in advance, in a state where the cylinder head is fixed to the second fixing jig.

In such a manner, in a case where each of the recess reference surfaces is formed in the lateral placement posture in which the plural recesses are arrayed in the horizontal direction before the inner walls of the plural recesses are processed, without being influenced by the inclination of the cylinder head, each of the reference surfaces can be formed such that all of the recess reference surfaces are positioned in the same plane. Thus, the inclination information necessary for processing the inner walls of the recesses can highly precisely be calculated based on the relative positions of at least two recess reference surfaces which are positioned in the same plane. In addition, the processing condition is corrected based on this calculated inclination information, and the respective inner walls of the recesses can thereby properly be processed such that shape non-uniformity of the plural recesses is decreased.

A processing method of a cylinder head for a multi-cylinder engine of the above embodiment includes: a step of fixing the cylinder head to a fixing jig of a machining apparatus in a vertical placement posture in which plural recesses are arrayed in an up-down direction, the plural recesses configuring portions of combustion chambers of respective cylinders; a step of calculating inclination information of the cylinder head in the vertical placement posture by measuring relative positions of at least two measured portions, each of which is positioned between the plural recesses, in a mating surface of the cylinder head, the mating surface being joined to a cylinder block disposed so as to cover the plural recesses, in a state where the cylinder head is fixed to the fixing jig; a step of correcting a valve seat processing condition by a tool of the machining apparatus, the valve seat processing condition being defined in advance, based on the calculated inclination information; and a step of processing each of valve seat surfaces of valve seats provided to inner walls of the plural recesses by the tool of the machining apparatus based on the corrected valve seat processing condition.

In this configuration, even in a case where the cylinder head fixed to the fixing jig in the vertical placement posture is inclined due to alignment errors or the like, the valve seat surfaces of the valve seats of each of the recesses can be processed based on the processing condition which is corrected so as to decrease an influence of the inclination, and non-uniformity of the positions of the valve seat surfaces of the valve seats can be reduced among the cylinders. Accordingly, because the positions of the valve heads are easily aligned in a state where the valves are closed, while the maintenance frequency of the machining apparatus is reduced, volume non-uniformity of the combustion chambers can be reduced, and lowering of processing efficiency can be reduced.

A processing method of a cylinder head for a multi-cylinder engine of the above embodiment includes: a recess processing step of processing respective inner walls of plural recesses configuring portions of combustion chambers of respective cylinders; a valve seat press-fitting step of press-fitting a valve seat into each of intake ports and exhaust ports which are formed in the inner wall of each of the recesses; a mating surface processing step of performing finishing processing of a mating surface of the cylinder head by a tool of the machining apparatus, the mating surface being joined to a cylinder block disposed so as to cover the plural recesses; and a valve seat processing step of processing respective valve seat surfaces of the press-fit valve seats. The recess processing step includes a step of fixing the cylinder head to a fixing jig of the machining apparatus in a vertical placement posture in which the plural recesses are arrayed in an up-down direction, a step of calculating inclination information of the cylinder head in the vertical placement posture by measuring relative positions of at least two recess reference surfaces among recess reference surfaces which are respectively formed in the plural recesses in a state where the cylinder head is fixed to the fixing jig, a step of correcting a recess processing condition by a tool of the machining apparatus, the recess processing condition being defined in advance, based on the calculated inclination information, and a step of processing respective inner walls of the plural recesses by the tool of the machining apparatus based on the corrected recess processing condition. The valve seat processing step includes a step of fixing the cylinder head to the fixing jig of the machining apparatus in the vertical placement posture, a step of calculating inclination information of the cylinder head in the vertical placement posture by measuring relative positions of at least two measured portions, each of which is positioned between the plural recesses, in the mating surface in a state where the cylinder head is fixed to the fixing jig, a step of correcting a valve seat processing condition by a tool of the machining apparatus, the valve seat processing condition being defined in advance, based on the calculated inclination information, and a step of processing the respective valve seat surfaces of the valve seats based on the corrected valve seat processing condition.

In this configuration, the inner wall of each of the recesses can be processed based on the processing condition which is corrected so as to decrease an influence of the inclination of the cylinder head, and the valve seat surfaces of the valve seats of each of the recesses can be processed based on the processing condition which is similarly corrected so as to decrease an influence of the inclination. Accordingly, while the maintenance frequency of the machining apparatus is reduced, volume non-uniformity of the combustion chambers can be reduced, and lowering of processing efficiency can be reduced.

## Claims

1. A processing method of a cylinder head for a multi-cylinder engine, in which the cylinder head is processed by a machining apparatus, the cylinder head being used for a multi-cylinder engine having plural cylinders and having plural recesses configuring portions of combustion chambers of the respective cylinders, the processing method comprising:
a step of fixing the cylinder head to a fixing jig of the machining apparatus in a vertical placement posture in which the plural recesses are arrayed in an up-down direction;
a step of calculating inclination information of the cylinder head in the vertical placement posture by measuring relative positions of at least two recess reference surfaces among recess reference surfaces which are respectively formed in the plural recesses in a state where the cylinder head is fixed to the fixing jig;
a step of correcting a recess processing condition by a tool of the machining apparatus, the recess processing condition being defined in advance, based on the calculated inclination information; and
a step of processing respective inner walls of the plural recesses by the tool of the machining apparatus based on the corrected recess processing condition.

2. The processing method of a cylinder head for a multi-cylinder engine according to claim 1, further comprising:
a step of fixing the cylinder head to a second fixing jig of the machining apparatus in a lateral placement posture in which the plural recesses are arrayed in a horizontal direction before the inner walls of the plural recesses are processed; and
a step of forming the respective recess reference surfaces in the plural recesses by a tool of the machining apparatus based on a reference surface processing condition, which is defined in advance, in a state where the cylinder head is fixed to the second fixing jig.

3. A processing method of a cylinder head for a multi-cylinder engine, in which the cylinder head is processed by a machining apparatus, the cylinder head being used for a multi-cylinder engine having plural cylinders and having plural recesses configuring portions of combustion chambers of the respective cylinders, the processing method comprising:
a step of fixing the cylinder head to a fixing jig of the machining apparatus in a vertical placement posture in which the plural recesses are arrayed in an up-down direction;
a step of calculating inclination information of the cylinder head in the vertical placement posture by measuring relative positions of at least two measured portions, each of which is positioned between the plural recesses, in a mating surface of the cylinder head, the mating surface being joined to a cylinder block disposed so as to cover the plural recesses, in a state where the cylinder head is fixed to the fixing jig;
a step of correcting a valve seat processing condition by a tool of the machining apparatus, the valve seat processing condition being defined in advance, based on the calculated inclination information; and
a step of processing each of valve seat surfaces of valve seats provided to inner walls of the plural recesses by the tool of the machining apparatus based on the corrected valve seat processing condition.

4. A processing method of a cylinder head for a multi-cylinder engine, in which the cylinder head is processed by a machining apparatus, the cylinder head being used for a multi-cylinder engine having plural cylinders and having plural recesses configuring portions of combustion chambers of the respective cylinders, the processing method comprising:
a recess processing step of processing respective inner walls of the plural recesses;
a valve seat press-fitting step of press-fitting a valve seat into each of intake ports and exhaust ports which are formed in the inner wall of each of the recesses;
a mating surface processing step of performing finishing processing of a mating surface of the cylinder head by a tool of the machining apparatus, the mating surface being joined to a cylinder block disposed so as to cover the plural recesses; and
a valve seat processing step of processing respective valve seat surfaces of the press-fit valve seats, wherein
the recess processing step includes
a step of fixing the cylinder head to a fixing jig of the machining apparatus in a vertical placement posture in which the plural recesses are arrayed in an up-down direction,
a step of calculating inclination information of the cylinder head in the vertical placement posture by measuring relative positions of at least two recess reference surfaces among recess reference surfaces which are respectively formed in the plural recesses in a state where the cylinder head is fixed to the fixing jig,
a step of correcting a recess processing condition by a tool of the machining apparatus, the recess processing condition being defined in advance, based on the calculated inclination information, and
a step of processing respective inner walls of the plural recesses by the tool of the machining apparatus based on the corrected recess processing condition, and
the valve seat processing step includes
a step of fixing the cylinder head to the fixing jig of the machining apparatus in the vertical placement posture,
a step of calculating inclination information of the cylinder head in the vertical placement posture by measuring relative positions of at least two measured portions, each of which is positioned between the plural recesses, in the mating surface in a state where the cylinder head is fixed to the fixing jig,
a step of correcting a valve seat processing condition by a tool of the machining apparatus, the valve seat processing condition being defined in advance, based on the calculated inclination information, and
a step of processing the respective valve seat surfaces of the valve seats based on the corrected valve seat processing condition.

5. The processing method of a cylinder head for a multi-cylinder engine according to claim 4, wherein
the recess processing step further includes
a step of fixing the cylinder head to a second fixing jig of the machining apparatus in a lateral placement posture in which the plural recesses are arrayed in a horizontal direction before the inner walls of the plural recesses are processed, and
a step of forming the respective recess reference surfaces in the plural recesses by a tool of the machining apparatus based on a reference surface processing condition, which is defined in advance, in a state where the cylinder head is fixed to the second fixing jig.
